# EUROPEAN PATENT SPECIFICATION

(11) **EP 3 736 540 B1**
(45) Date of publication and mention of the grant of the patent: **19.07.2023**
(21) Application number: 19189190.2
(22) Date of filing: 30.07.2019
(51) Int. Cl.: G01D 5/14

(54) **MAGNETIC SCALE DEVICE, POSITION MEASURING DEVICE AND POSITION MEASURING METHOD**
MAGNETISCHE SKALENVORRICHTUNG, POSITIONSMESSVORRICHTUNG UND POSITIONSMESSVERFAHREN
DISPOSITIF D'ÉCHELLE MAGNÉTIQUE, DISPOSITIF DE MESURE DE POSITION ET PROCÉDÉ DE MESURE DE POSITION

(30) Priority: 07.05.2019 CN 201910374389
(43) Date of publication of application: 11.11.2020
(73) Proprietor: Grimm, Felix, 78239 Rielasingen-Worbligen (DE); Ding, Zhaoyang, 78247 Hilzingen (DE)
(72) Inventor: Grimm, Felix, 78239 Rielasingen-Worbligen (DE); Ding, Zhaoyang, 78247 Hilzingen (DE)
(74) Representative: Patent- und Rechtsanwälte Behrmann Wagner PartG mbB

(56) References cited:
- DE-A1-102017 204 879
- US-A1- 2010 134 095
- US-A1- 2015 059 195
- US-A1- 2016 363 637
- US-A1- 2018 313 664

## Description

### TECHNICAL FIELD

The present invention relates to a magnetic scale device, a position measuring device, and a position measuring method, and more particularly to a magnetic scale device, a position measuring device, and a position measuring method for calibrating a position by detecting a change in a magnetic field caused by a magnetic material.

### BACKGROUND

In the control field of elevator control, machine control, etc., in order to achieve precise control, accurate position measurement is usually required. Taking elevator control technology as an example, in order to detect a position of a car, a scale with absolute position coding is usually deployed in an elevator hoistway, and a scale reading apparatus is arranged on the car. When the car moves within the hoistway, the scale reading apparatus knows the current position of the elevator by reading the position coding on the scale. In machine tool control technology, a control is performed by detecting a position of components associated with the machine tool.

As a way of measuring the position, different two-dimensional code marks can be pasted on the metal strip to locate different position codings. A disadvantage of this position measurement method is that it is less tolerant to the poor usage environment in the elevator hoistway. For example, water, high humidity, dust, oil and other factors in the hoistway will cause distortion of the coding reading, and smoke will also affect the photoelectric sensor of the two-dimensional code reading apparatus to a certain extent, and thus the practicability is not good.

Therefore, it is desirable to provide a technique capable of performing position measurement more reliably.

A position measuring apparatus is known from DE 10 2017 204 879 A1, wherein the position of a roller bearing is measured relative to a rail using a magnetoresistive sensor to detect periodically distributed markings along the longitudianl rail axis.

US 2010/0134095 A1 discloses a magnetizing apparatus with a permanent magnet and a magnetic field detector for scanning a magnetic scale or measuring rod, e. g. for applications in precision mechanics, with one or a plurality of parallel teeth structures periodic in the direction of motion, wherein the magnetizing apparatus is used to determine the tooth position.

US 2018/0313664 A1 discloses a stroke detector, e.g. for a machine tool, with a permanent magnet and a magnetic field detector for measuring the stroke by detecting grooves with predefined and repeating dimensions in a scale device.

US 2016/0363637 A1 shows a magnetic field measuring device with a magnet and a magnetic field sensor.

US 2015/0059195 A1 discloses a scale device with markings which can be detected by an optical sensor to determine the position of an elevator.

### SUMMARY

The above-indicated problem is solved by a magnetic scale device according to claim 1, a position measuring device according to claim 10 and a position measuring method according to claim 20.

The present disclosure provides a magnetic scale device, a position measuring device, and a position measuring method, which design a reliable magnetic scale structure which is less interfered by the environment, and perform position measurement by measuring the change of a magnetic field by using the magnetic scale structure, thereby improving reliable and accurate position measurement.

According to a first aspect of the present disclosure, there is provided a magnetic scale device according to claim 1.

In combination with the first aspect, in an implementation of the first aspect, the scale body may be continuously disposed in a space to be measured, and magnetism of the ferromagnetic material disappears when its distance from the magnets exceeds a predetermined distance value.

In combination with the first aspect and the above implementations thereof, in another implementation of the first aspect, the predetermined coding pattern of the scale body divides the ferromagnetic material into a non-central symmetrical discontinuous shape in the width direction.

The predetermined coding pattern of the scale body makes the ferromagnetic material discontinuous in a length direction by comprising a plurality of discontious apertures in the length direction, whereby adjacent aperatures have different arrangements, and change a balanced structure of the transition magnetic field when approaching the magnets, thereby forming a position coding for position measurement using the transition magnetic field whose balanced structure has been changed.

In combination with the first aspect and the above implementations thereof, in another implementation of the first aspect, the magnetic material may include at least one of ferritic stainless steel and a conventional ferromagnetic material subjected to electroplating treatment.

In combination with the first aspect and the above implementations thereof, in another implementation of the first aspect, the magnets may be a first magnet and a second magnet that are oppositely disposed, a first polarity direction of the first magnet and a second polarity direction of the second magnet being opposite.

In combination with the first aspect and the above implementations thereof, in another implementation of the first aspect, a balance point is formed at a center of the transition magnetic field of the magnets, the magnetic field detector may be located at the center of the transition magnetic field, and may detect a magnetic field after the transition magnetic field is changed under the function of the scale body.

In combination with the first aspect and the above implementations thereof, in another implementation of the first aspect, a center of a transition magnetic field of the magnest may form an balanced point, and a center of the scale body in width may be located at the center of the transition magnetic field, and a surface of the scale body may be parallel to a detection surface of the magnetic field detector.

In combination with the first aspect and the above implementations thereof, in another implementation of the first aspect, the detection surface of the magnetic field detector faces the scale body, the magnetizing apparatus is located on a back surface of the magnetic field detector opposite to the detection surface, and is farther away from the scale body than the magnetic field detector.

In combination with the first aspect and the above implementations thereof, in another implementation of the first aspect, the predetermined coding pattern on the scale body may include position coding information, and the predetermined coding pattern is capable of changing the transition magnetic field having a balanced structure into a step-wise abrupt magnetic field corresponding to the position coding information; the magnetic field detector may include a plurality of magnetic sensing elements for detecting magnetic field data of an approximately sine periodic alternating in the step-wise abrupt magnetic field for position measurement.

According to a second aspect of the present disclosure, there is provided a position measuring apparatus according to claim 10.

With regard to the implementation of one or more of the scale body, the magnetizing apparatus and the magnetic field detector in the position measuring device, reference may be made to the various implementations in the first aspect above.

According to a third aspect of the present disclosure, there is provided a position measuring method for a position measuring device according to claim 20.

With regard to the implementation of the position measuring device to which the position measuring method is applicable, reference may be made to the respective implementations according to the first and second aspects above.

In various embodiments according to the present disclosure, the scale body is formed by using the ferromagnetic material, the predetermined coding pattern of the scale body is used to change the magnetic field formed by the magnets in different ways at different positions of the scale body, so that the position measurement can be performed by detecting the changed magnetic field. This position measuring method is reliable and accurate.

In various embodiments according to the present disclosure, the scale body is made of the ferromagnetic material, which is a substance that is not magnetic in nature and will be magnetic, i.e. magnetized, under the function of the magnetic field, and the ferromagnetic material can be magnetized only under the function of a very small magnetic field. Compared with other magnetic substances which have magnetism originally, the ferromagnetic material has extremely strong defense against unfavorable factors such as metal or nonmetal powder, high temperature, oil stain, high humidity and the like in the usage environment, and have higher wear resistance characteristics, so the magnetic scale device of the present disclosure has high reliability.

A volume of the magnetizing apparatus moving relative to the scale body can be relatively small, and the magnetizing apparatus can be in a relatively closed environment, and the working characteristics of the magnetizing apparatus are less influenced by the environment. Therefore, in the magnetic scale device in the present disclosure, a specific ferromagnetic material is selected to form a scale body, proper match is made between the scale body and the magnet, and the predetermined coding pattern of the scale body is utilized to label different positions of the scale body, so that adverse effects of environmental factors on the magnetic scale device can be avoided, and thus reliable magnetic field data can be provided, and accurate and reliable position measurement can be performed according to the reliable magnetic field data. Also, corresponding advantages will be set forth later in connection with various embodiments of the present disclosure.

### BRIEF DESCRIPTION OF THE DRAWINGS

In order to more clearly illustrate the technical solutions of the embodiments of the present disclosure, the drawings used in the embodiments or the description of the prior art will be briefly described below. Obviously, the drawings in the following description are only some embodiments of the present disclosure. For those of ordinary skill in the art, other drawings can be obtained according to these drawings without creative labor.
- FIG. 1: is an exploded schematic diagram illustrating a magnetic scale device according to an embodiment of the present disclosure;
- FIG. 2: is a schematic diagram illustrating a magnetic field detector and a magnetizing apparatus in the magnetic scale device of FIG. 1;
- FIG. 3: schematically illustrates a schematic diagram of a transition magnetic field with a balanced structure formed by magnets in the magnetizing apparatus shown in FIG. 2;
- FIG. 4: schematically illustrates a magnetic field distribution after placing the scale body in the transition magnetic field of FIG. 3;
- FIG. 5: is a side view schematically illustrating a first embodiment of the magnetic scale device of FIG. 1;
- FIG. 6: is a side view schematically illustrating a second embodiment of the magnetic scale device of FIG. 1;
- FIG. 7: schematically illustrates a first coding pattern of the scale body in the magnetic scale device according to an embodiment of the present disclosure;
- FIG. 8: schematically illustrates a second coding pattern of the scale body in the magnetic scale device according to an embodiment of the present disclosure;
- FIG. 9: schematically illustrates a third coding pattern of the scale body in the magnetic scale device according to an embodiment of the present disclosure;
- FIG. 10: schematically illustrates a fourth coding pattern of the scale body in the magnetic scale device according to an embodiment of the present disclosure;
- FIG. 11: is a structural diagram illustrating a position measuring device for an elevator according to an embodiment of the present disclosure;
- FIG. 12: is a flow chart schematically illustrating a position measuring method according to an embodiment of the present disclosure.

### DETAILED DESCRIPTION

The technical solutions in the embodiments of the present disclosure are clearly and completely described in the following with reference to the accompanying drawings in the embodiments of the present disclosure. It is obvious that the described embodiments are a part of the embodiments of the present disclosure, and not all of the embodiments. All other embodiments obtained by a person of ordinary skill in the art based on the embodiments of the present disclosure without departing from the inventive scope are within the scope of protection in the present disclosure.

In the present disclosure, when it is described that a specific component is located between the first component and the second component, there may or may not be an intervening component between the specific component and the first component or the second component; when it is described that a specific component is connected to other components, the specific component may be directly connected to the other components without intervening components, or may have intermediate components without direct connection with the other components.

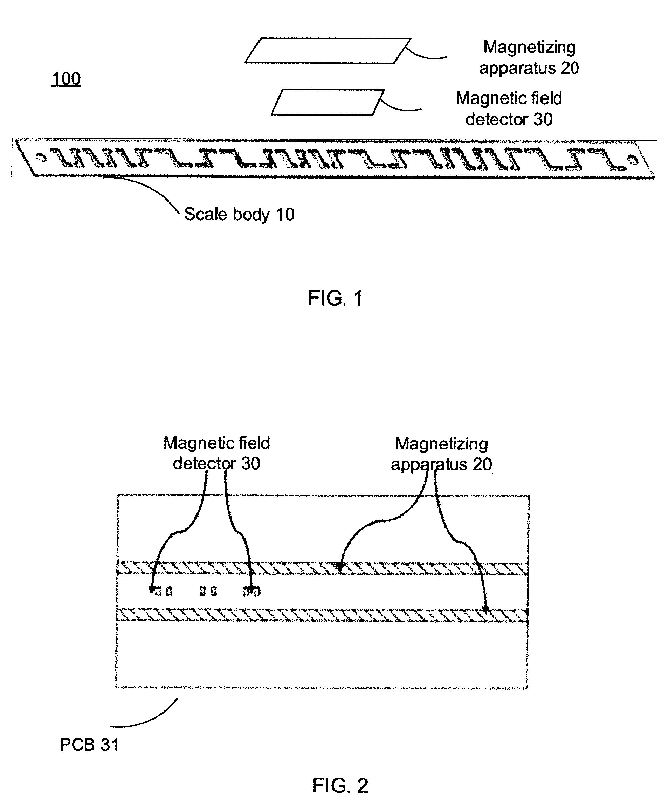

FIG. 1 is an exploded schematic diagram illustrating a magnetic scale device 100 according to an embodiment of the present disclosure. As shown in FIG. 1, the magnetic scale device 100 includes: a scale body 10 made of ferromagnetic material, the scale body 10 having a predetermined coding pattern; a magnetizing apparatus 20 including a pair of magnets forming a transition magnetic field having a balanced structure, the scale body capable of changing the transition magnetic field; a magnetic field detector 30 located in the transition magnetic field and used for detecting a magnetic field formed by the magnetizing apparatus under a function of the scale body.

As shown in the lateral direction of FIG. 1, the scale body 10 is continuously arranged in a space to be measured. As an example, the space to be measured may be a hoistway of an elevator or may be a control platform line of a machine tool system.

The scale body 10 is made of a ferromagnetic material. The ferromagnetic material is a substance that is not magnetic in nature and will be magnetic, that is, magnetized under a function of a magnetic field. The ferromagnetic material can be magnetized only under a function of a very small magnetic field. Magnetism of ferromagnetic material disappears when its distance from the magnets exceeds a predetermined distance value. Therefore, the scale body 10 will not adsorb other metal fragments.

As an example, the scale body 10 can be made of stainless steel, for example, a stainless steel sheet with the brand 430, and is realized on the stainless steel sheet by punching. The scale body 10 is formed by punching stainless steel with brand 430, so that the scale body has excellent characteristics in environmental resistance, does not generate general corrosion and rust, can resist conventional mechanical collision and friction, and is not easy to be influenced by severe environmental factors such as high temperature, high humidity and the like. The stainless steel with brand 430 has high magnetic permeability, so it can play a better role in changing a magnetic field formed by magnetizing apparatus 20. In the case where the scale body 10 is made of the ferromagnetic material, even if the scale body is contaminated with water, dust and other materials, the magnetic field will not be affected, and interference factors such as smoke and the like will not be feared, and thus the working performance is more reliable. Further, the scale body 10 may be made of other ferromagnetic materials, such as conventional ferromagnetic materials. In practice, the choice can be made according to the specific working environment, performance requirements, etc. The specific kinds of ferromagnetic materials do not constitute limitations to the embodiments of the present disclosure.

If the scale body 10 is made of a magnetic substance that is inherently magnetic, it has the following disadvantages. Firstly, the scale body needs magnetic materials with relatively large overall magnet area. These magnetic materials with magnetism are easy to stick other small metal objects, such as metal scraps, screws and the like in a long hoistway. Secondly, magnetic materials with magnetism are easily affected by high temperature and strong magnetism and thus lose their magnetic properties, i.e. data failure. Thirdly, magnetic materials with magnetism are easy to be damaged and even lead to a failure of the magnetic scale after repeated collision and friction. Finally, the magnetic scale has certain difficulties in terms of material composition and production process difficulty, and thus the cost is relatively high.

Therefore, in the embodiment of the present disclosure, compared with other magnetic substances that have magnetism originally, ferromagnetic materials have strong defense against unfavorable factors such as metal or nonmetal dust, high temperature, oil stain, high humidity and the like in the usage environment, and have higher wear resistance characteristics, and thus the magnetic scale device of the present disclosure has higher reliability.

As shown in FIG. 1, the scale body 10 is a longitudinal direction in the lateral direction and a width direction in a direction perpendicular to the longitudinal direction, and the predetermined coding pattern of the scale body 10 divides the ferromagnetic material into a non-central symmetrical discontinuous shape in a width direction. In the width direction of the scale body 10 of FIG. 1, Z-shaped and anti-Z-shaped coding patterns are adopted, which makes it non-central symmetric in the width direction, and thus possibly extending or shortening the structurally balanced transition magnetic field formed by the magnetizing apparatus 20, causing it to be unbalanced, thereby being able to mark the specific position of the coding pattern. For each Z-shaped or anti-Z-shaped aperture, the length or width of the aperture in the length direction of the scale body 10 may be different, or the length of the each in the width direction of the scale body 10 may be different, thereby forming diversified aperture sizes. Alternatively, each aperture of the scale body 10 may not be located at a center of the scale body 10 in the width direction, thereby dividing the ferromagnetic material into the non-center symmetrical discontinuous shape in the width direction.

Further, the predetermined coding pattern on the scale body 10 makes the ferromagnetic material discontinuous in the length direction. As shown in FIG. 1, a plurality of discontinuous Z-shaped or anti-Z-shaped apertures are formed in the length direction of the scale body 10, the adjacent two apertures are discontinuous, and each different aperture extends or shortens the structurally balanced transition magnetic field formed by the magnetizing apparatus 20 differently, thereby calibrating an position of the magnetizing apparatus relative to the scale body.

The magnetizing apparatus 20 in FIG. 1 includes a magnet. The magnet is a substance or material that can generate magnetic fields, such as a permanent magnet that can maintain their magnetism for a long time. The permanent magnet is a hard magnet and is not easy to lose magnetism. In other words, the magnet is a substance or material that has magnetism itself. In the embodiment of the present disclosure, the magnet is a pair of magnets forming a transition magnetic field having a balanced structure. The magnets may be a pair of magnets arranged oppositely. In addition to the magnets, the magnetizing apparatus may also include other components, such as components for supporting or fixing the magnets.

FIG. 2 is a schematic diagram illustrating a magnetic field detector and a magnetizing apparatus in the magnetic scale device of FIG. 1. In FIG. 2, the magnets are a first magnet and a second magnet (as shown by an oblique line portion in FIG. 2) which are arranged relatively in parallel, and the first polarity direction of the first magnet and the second polarity direction of the second magnet are opposite. As an example, the first polarity direction of the first magnet is south-up and north-down, while the second polarity direction of the second magnet is north-up and south-down; alternatively, the first polarity direction of the first magnet is north-up and south-down, while the second polarity direction of the second magnet is south-up and north-down. The magnetic field detector 30 is located between the first magnet and the second magnet. For example, the first magnet and the second magnet are symmetrically arranged, and the magnetic field detector 30 may be located at a central position between the first magnet and the second magnet.

In FIG. 2, the magnetic field detector 30 is shown as 6 magnetic sensing elements. As an example, the magnetic sensing elements may be Hall elements or any other elements capable of detecting a magnetic field. Each of the 6 magnetic sensing elements can detect the value of the magnetic field at its location, for example, a direction and magnitude of the magnetic field at its location. The position of the sensor can be calculated by using the 6 magnetic field values sensed by the 6 magnetic sensing elements. The number 6 of magnetic sensing elements described above is merely an example, and in specific practice it is more or less, for example, it may be 1, 3, 4, 8, etc. The specific number of magnetic sensing elements does not constitute a limitation to the embodiments of the present disclosure. In the case of the 6 magnetic field values sensed by the 6 magnetic sensing elements, the calculated position precision of the sensor can reach one-sixteenth of a millimeter. The precision is only exemplary, and the specific precision varies depending on the specific algorithm.

In FIG. 2, in addition to the magnetizing apparatus 20 and the magnetic field detector 30, a printed circuit board (PCB) 31 for carrying the magnetic field detector 30 is also shown. Further, the PCB 31 can also carry other devices in the specific application environment of the magnetic scale 100, can also be used to transmit signals between the carried devices, and can also be provided with ground wires and the like.

The first magnet and the second magnet in FIG. 2 are symmetrically arranged to form the transition magnetic field having a balanced structure. In other words, when the scale body 10 is not added to the transition magnetic field formed by the first magnet and the second magnet, the magnetic field detected by the magnetic field detector located at the center of the transition magnetic field is neutral, that is, there is no obvious north-south pole characteristic. When the scale body 10 is added to the transition magnetic field formed by the first magnet and the second magnet, the scale body 10 is magnetized under the function of the first magnet and the second magnet, thereby changing the transition magnetic field and making the structure no longer balanced. Accordingly, the scale body 10 changes the balanced structure of the transition magnetic field when approaching the magnet, so that a position coding for position measurement can be formed using the transition magnetic field whose balanced structure has changed.

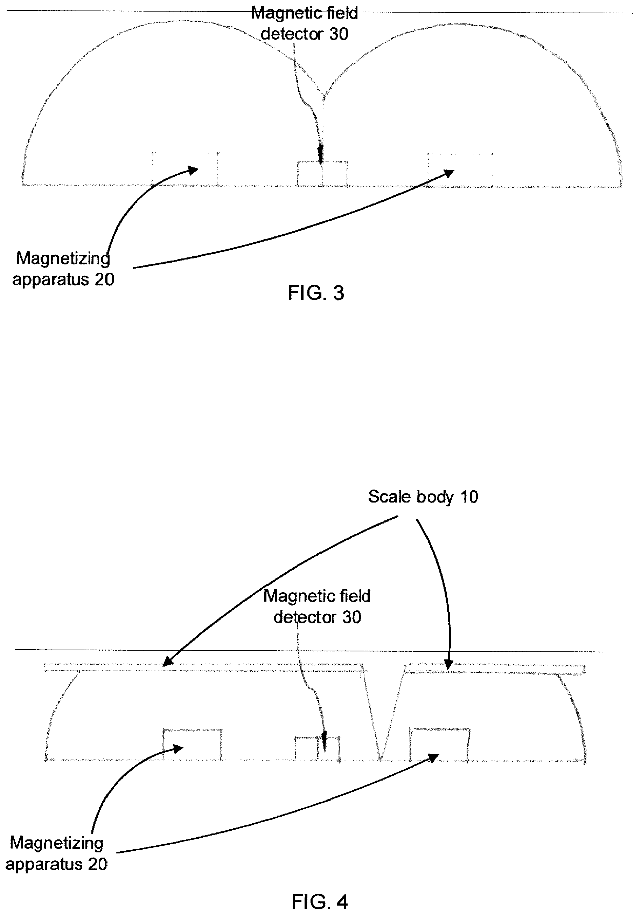

FIG. 3 is a schematic diagram of a transition magnetic field with a balanced structure formed by magnets in the magnetizing apparatus shown in FIG. 2. As shown in circular arcs of FIG. 3, the first magnet 21 and the second magnet 22 in the magnetizing apparatus form magnetic fields respectively. Since the first polarity direction of the first magnet 21 and the second polarity direction of the second magnet 22 are opposite, the magnetic field at the intersection of the magnetic field of the first magnet 21 and the magnetic field of the second magnet 22 is neutral, i.e., there is no obvious north-south pole characteristic. The symmetrical structure of the first magnet 21 and the second magnet 22 forms a balanced structure of the transition magnetic field. In FIG. 3, the magnetic field detector 30 is located at a central position between the first magnet 21 and the second magnet 22. Under the condition that the magnetizing apparatus is far away from the scale body and does not interact with the scale body, the magnetic field intensity detected by the magnetic field detector 30 is close to 0. In FIG. 3, the magnetic field detector 30 is located at the central position between the first magnet 21 and the second magnet 22, which is only an example, and it may be located at other positions between the first magnet 21 and the second magnet 22, or even outside one of the first magnet 21 and the second magnet 22. When the position of the magnetic field detector 30 relative to the first magnet 21 and the second magnet 22 changes, the magnetic field strength measured by the magnetic field detector 30 also changes. Accordingly, a method of calculating the position based on the magnetic field strength measured by the magnetic field detector 30 also changes.

FIG. 4 schematically illustrates a magnetic field distribution after placing the scale body in the transition magnetic field of FIG. 3. After the scale body 10 is placed in the magnetic field formed by the magnet, the aperture is used to divide the ferromagnetic material due to the aperture in the scale body 10. This is because the magnetic permeability of the air around the aperture is different from that of the ferromagnetic material in the scale body 10. The magnetic permeability of the air makes the magnetic permeability of the ferromagnetic material discontinuous, and thus the magnetic field near the scale body 10 is extended or cut off. In the position of the scale body 10 shown in FIG. 4 where there is no aperture, the magnetic field formed by the magnetizing apparatus 20 is extended; in the position of the scale body 10 shown in FIG. 4 where there is an aperture, the magnetic field formed by the magnetizing apparatus 20 is cut off. Accordingly, the scale body 10 changes the balanced structure of the transition magnetic field when approaching the magnetizing apparatus 20. Further, since the opening pattern of the scale body 10 is varied and discontinuous in its length direction, the balanced structure of the transition magnetic field is changed in different ways at different positions in the length direction of the scale body 10, thereby forming different magnetic fields to mark positions. Accordingly, the position coding for position measurement can be formed by using a transition magnetic field whose balanced structure has changed.

As can be seen from the above descriptions, in the present disclosure, the scale body 10 having a predetermined coding pattern is used to affect the balance characteristic of the magnetic field of the magnetizing apparatus 20 when the scale body 10 approaches the magnetizing apparatus 20, so that the magnetic field detector 30 can read out the corresponding magnetic field direction and magnitude under a specific coding pattern. In the present disclosure, the predetermined coding pattern on the scale body 10 contains position coding information, and the predetermined coding pattern can change the transition magnetic field having a balanced structure into a step-wise abrupt magnetic field corresponding to the position coding information. As described below, the step-wise abrupt magnetic field may represent magnetic field state information such as "1" and "0", so that position coding information can be obtained.

As shown in FIG. 4, when the scale body 10 is located within an upper region of the transition magnetic field of the magnetizing apparatus 20, the originally symmetrical transition magnetic field will be distorted due to the scale body 10 of ferromagnetic material newly added to the magnetic field, the magnetic field on the left will be extended by the ferromagnetic material of the scale body 10, and the magnetic field on the right will be compressed and reduced by the ferromagnetic material of the scale body 10. Assuming that a magnetic field value on the left is defined as a positive number, a magnetic field value on the right is defined as a negative number, and assuming that the positive number is a binary "1" and the negative number is a binary "0". Therefore, the magnetic sensor (Hall sensor) located in the center detects the magnetic field value on the left. This magnetic field vector value can represent the proximity of the ferromagnetic material and the pattern coding is "1". On the contrary, if the magnetic field on the right in FIG. 4 is compressed and reduced by the ferromagnetic material of the scale body 10, and the magnetic field on the right is extended by the ferromagnetic material of the scale body 10, the magnetic sensing element located in the center will detects the magnetic field value on the right, which can represent the proximity of the ferromagnetic material and the pattern coding is "0". The scale body 10 of the present disclosure may contain only position coding information and no other graphic information. When a distance between the scale body 10 and the magnetizing apparatus is less than a predetermined distance, for example, the magnetic field with alternating magnetization polarity transition, i.e., the step-wise abrupt magnetic field, will occur in the center line region of the scale body 10. The step-wise abrupt magnetic field may be different from other magnetic fields, such as sinusoidal periodic alternating magnetic fields.

For the position coding corresponding to the predetermined coding pattern of the scale body 10, in addition to the positive and negative values ("0" or "1") detected by the magnetic field detector 30 described above, the predetermined coding pattern of the scale body 10 changes the transition magnetic field of the magnets into the step-wise abrupt magnetic field. The magnetic field detector 30 may include a plurality of magnetic sensing elements for detecting a plurality of magnetic field values of the step-wise abrupt magnetic field, so that precise position information can be obtained. When the magnetic field detector 30 is less than the predetermined distance from the scale body 10, the magnetic field detector 30 can detect approximately sine periodic alternating magnetic field data in the step-wise abrupt magnetic field. The approximately sine periodic alternating magnetic field data can further precisely locate the position of the magnetic field detector 30. It should be noted that since the approximately sine periodic alternating magnetic field data is magnetic field data at a specific position in the spatial magnetic field formed by the scale body 10 and the magnetizing apparatus 20 having a specific positional relationship, it is not information of the scale body 10, that is, the approximately sine periodic alternating magnetic field information is not solidified on the scale body 10. The approximately sine periodic alternating here is not a mathematical sinusoidal relation, but a plurality of magnetic field data form a shape characteristic similar to a sine wave, independent of the phase of the sine wave.

As an example, the magnetic field detector 30 may include 16 magnetic sensing elements that sense the absolute position coding of continuous 16-bit binary coding, i.e., the coding "1" or "0" mentioned above. The positions are marked with a combination of the 16-bit "1" or "0". The number of the continuous sensing elements may affect the overall length of the absolute position coding grid. On the other hand, 6 of the 16 magnetic sensing elements can be placed continuously. The magnetic field vector values, including the direction and value of the magnetic field, can be sensed using the plurality of magnetic sensing elements that are continuously placed. The absolute position of the magnetic field detector 30 is calculated from the magnetic field vector values sensed by the consecutive 6 magnetic sensing elements, and the precision can reach up to about one-sixteenth of a millimeter.

In the present disclosure, the magnetizing apparatus 20 and the magnetic field detector 30 have smaller sizes and can be placed in a relatively closed space, which has less influence on external metal materials, so that the reliability of the magnetic scale device 100 can be improved.

In the magnetic scale device 100 as described above according to the present disclosure, by making the scale body 10 of ferromagnetic material, the magnetic field formed by the magnets is changed in different ways at different positions of the scale body using a predetermined coding pattern of the scale body 10, so that the position measurement can be performed by detecting the changed magnetic field. This position measuring method is reliable and accurate.

The scale body 10 of the magnetic scale device 100 is made of ferromagnetic material. The ferromagnetic material is originally a nonmagnetic substance and will be magnetic under the function of the magnetic field, and the ferromagnetic material can be magnetized under the function of a very small magnetic field. Compared with other magnetic substances which have magnetism originally, the ferromagnetic material have extremely strong defense against unfavorable factors such as metal or nonmetal powder, high temperature, oil stain, high humidity and the like in the usage environment, and have higher wear resistance characteristics, so the magnetic scale device of the present disclosure has higher reliability. Further, the scale body 10 made of ferromagnetic material loses its magnetism soon after leaving the magnetizing apparatus 20, so it does not have the characteristic of absorbing metal dust. The scale body 10 is formed into the predetermined coding pattern only by coding and punching the ferromagnetic material, and a flexible magnetic material or a two-dimensional code mark do not need to be pasted on the scale body 10, so that the manufacturing process is simple, the material composition is simple, and failure factors in the usage process are also greatly reduced.

The magnetizing apparatus 20 and the magnetic field detector 30 that move relatively to the scale body 10 are relatively small in volume and can be in a relatively closed environment, and their operating characteristics are also less affected by the environment. Therefore, the magnetic scale device in the present disclosure selects a specific ferromagnetic material to form a scale body, proper cooperation are made between the scale body and the magnet, and the predetermined coding pattern of the scale body are used for locating different positions of the scale body, so that adverse effects of environmental factors on the magnetic scale device can be avoided, reliable magnetic field data can be provided, and accurate and reliable position measurement can be performed according to the reliable magnetic field data.

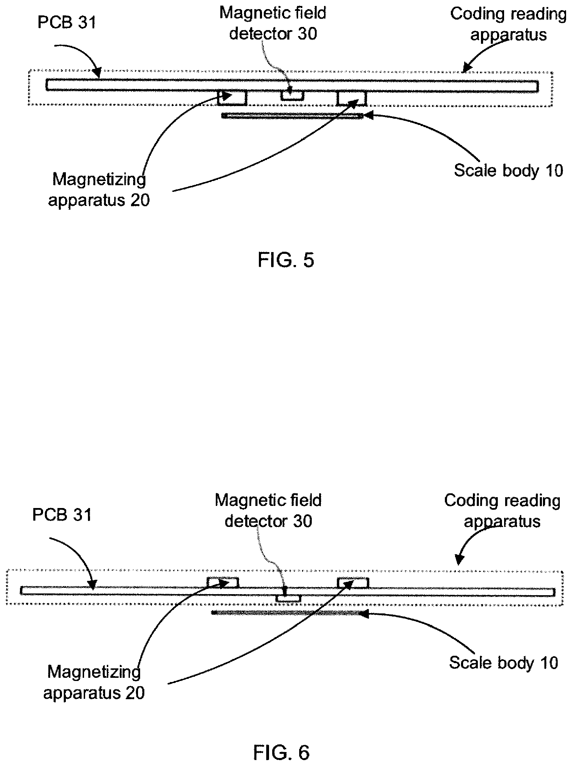

FIG. 5 is a side view schematically illustrating a first embodiment of the magnetic scale device 100 of FIG. 1. In FIG. 5, the magnetizing apparatus 20 is located between the scale body 10 and the magnetic field detector 30, and the magnetic field detector 30 is arranged on the PCB 31. The magnetizing apparatus 20, the magnetic field detector 30 and the PCB 31 form a coding reading apparatus. The coding reading apparatus is used to read a magnetic field that varies depending on the coding pattern of the scale body 10, so that the position of the magnetic field detector 30 can be identified according to the variation of the magnetic field.

As shown in FIG. 5, the magnetizing apparatus 20 is made of a pair of magnets with opposite polarities, which are respectively arranged on both sides in the width direction of the scale body 10. The scale body 10 is engraved with a predetermined special pattern in the width direction to divide the width of the scale body 10 in the left-right direction. Therefore, it is possible to generate the extension of the magnetic field of the magnetizing apparatus 20 in the width direction of the scale body 10. That is, the magnetic field of the north and south poles of the magnetizing apparatus 20, which originally has a balanced structure, is caused to extend or contract according to a specific law under the function of the scale body 10. A balance point is formed at the center of the transition magnetic field of the two magnets in the magnetizing apparatus 20 in FIG. 5, and the magnetic field detector 30 is located at the center of the transition magnetic field and detects the magnetic field after the transition magnetic field is changed under the function of the scale body 10. The magnetic field detector 30 includes a detection surface facing the magnetic field to be detected and a back surface facing away from the detection surface. A center in width of the scale body 10 of FIG. 5 is located at the center of the transition magnetic field, and the surface of the scale body 10 is opposite to and parallel to the detection surface of the magnetic field detector 30. When in operation, the magnetizing apparatus 20 is close to any section of the scale body 10 and functions to magnetize the scale body 10 and form the magnetic field with the predetermined structure by cooperating with the scale body 10.

In the embodiment of the magnetic scale device 100 shown in FIG. 5, since the magnetic field detector 30 and the scale body 10 are located at the center of the transition magnetic field, the arrangement thereof is relatively simple, and the calculation amount of subsequent position recognition by the coding is reduced to some extent. However, depending on specific requirements and application scenarios, the magnetic field detector 30 may not be located in the center of the transition magnetic field, and the scale body 10 may not be located in the center of the transition magnetic field.

FIG. 6 is a side view schematically illustrating a second embodiment of the magnetic scale device 100 of FIG. 1. The second embodiment of FIG. 6 differs from the first embodiment of fig. 5 in that the positions of the magnetizing apparatus 20 and the magnetic field detector 30 are changed. In FIG. 6, the magnetizing apparatus 20, the magnetic field detector 30, and the PCB 31 form the coding reading apparatus. The coding reading apparatus is used to read a magnetic field that varies depending on the coding pattern of the scale body 10, so that the position of the magnetic field detector 30 is identified according to the variation of the magnetic field.

In FIG. 6, the magnetic field detector 30 is located between the magnetizing apparatus 20 and the scale body 10, the magnetizing apparatus 20 is located on the back side of the magnetic field detector 30, and the magnetic field detector 30 is arranged on the PCB 31. In other words, the detection surface of the magnetic field detector 30 faces the scale body 10, and the magnetizing apparatus 20 is located on the back surface of the magnetic field detector 30 opposite to the detection surface and further away from the scale body 10 than the magnetic field detector. When in operation, the magnetizing apparatus 20 is close to any section of the scale body 10 and functions to magnetize the scale body 10 and form the magnetic field with the specific structure by cooperating with the scale body 10. The magnetic field detector 30 may be composed of a plurality of Hall elements, for example, and is located in the magnetic field formed by the magnetizing apparatus 20 and the scale body 10.

In the embodiment of FIG. 6, the magnetizing apparatus 20 is located on the back surface of the magnetic field detector 30 and further away from the scale body 10, which reduces the influence of the magnetizing apparatus 20 on external metal materials and further improves the reliability of the magnetic scale device 100. Details of each element in FIG. 6 can be referred to the descriptions above in combination with FIGS. 1-5.

As described above, the scale body 10 of the present disclosure may be formed in the predetermined coding pattern by engraving or punching the ferromagnetic material. The magnetic permeability of a coding region is different from that of a non-coding region, so after the ferromagnetic material is magnetized, regions with different patterns may interact with the magnetizing apparatus in different ways to form coding, so as to measure positions. The following is a schematic example of an aperture coding pattern formed by punching to help better understand the design of the coding pattern.

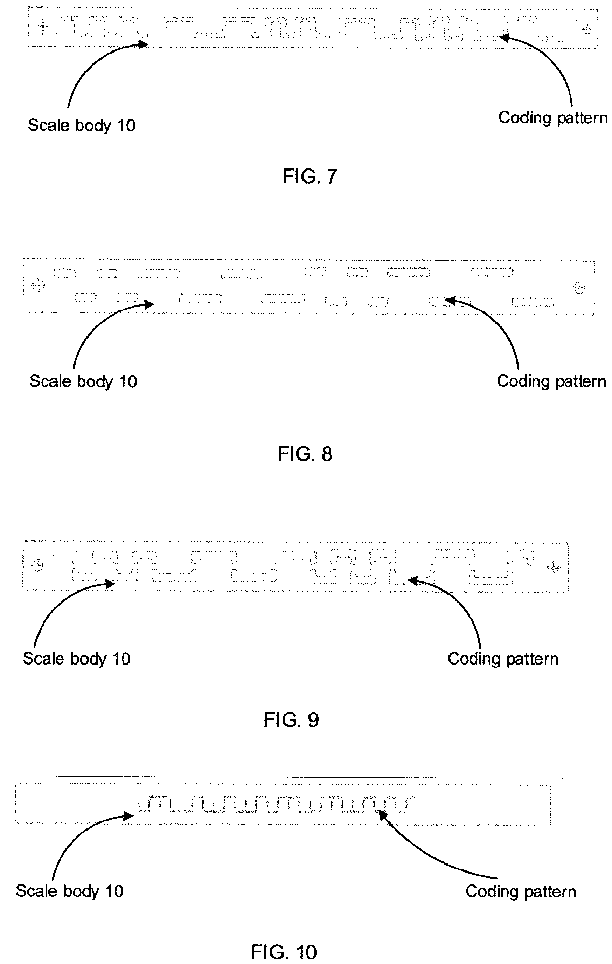

FIG. 7 schematically illustrates the first coding pattern of the scale body in the magnetic scale device according to an embodiment of the present disclosure. In the first coding pattern of FIG. 7, a plurality of Z-shaped and anti-Z-shaped aperture coding patterns are used. In FIG. 7, the Z-shaped aperture coding patterns may have different sizes in the length direction of the scale body 10, and may also have different sizes in the width direction of the scale body 10, i.e., the Z-shaped apertures with different sizes are formed. The anti-Z-shaped aperture coding patterns may have different sizes in width in the length direction of the scale body 10, and may also have different sizes in the width direction of the scale body 10, i.e., the anti-Z-shaped apertures with different sizes are formed. The magnetic permeability of air in the aperture region is different from the magnetic permeability of ferromagnetic material in the scale body 10. When the magnetizing apparatus is close to the scale body 10, the Z-shaped or anti-Z-shaped aperture with different sizes will form the magnetic field with different structures by cooperating with the magnetizing apparatus. In FIG. 7, each of Z-shaped or anti-Z-shaped aperture is shown to have substantially the same size in the width direction of the scale body 10, which is only an example. The Z-shaped or anti-Z-shaped apertures may have different sizes in the width direction of the scale body 10 as required.

FIG. 8 schematically illustrates a second coding pattern of the scale body in the magnetic scale device according to an embodiment of the present disclosure. In the second coding pattern of FIG. 8, 2 rows of in-line aperture coding patterns are used. The number of rows of the aperture coding pattern is not limited to 2 rows, which may be 1 row, 3 rows, etc. as required. In FIG. 8, each in-line aperture may have different sizes, such as different lengths and widths, and a distance from each in-line aperture to the center line of the scale body in the width direction may be different. The magnetic permeability of air in the aperture region is different from the magnetic permeability of ferromagnetic material in the scale body 10. When the magnetizing apparatus is close to the scale body 10, the in-line aperture with different sizes and the magnetizing apparatus will form the magnetic field with different structures, and the structure of the magnetic field corresponds to the aperture coding pattern.

FIG. 9 schematically illustrates a third coding pattern of the scale body in the magnetic scale device according to an embodiment of the present disclosure. In the third coding pattern of FIG. 9, 2 rows of U-shaped apertures coding pattern are adopted, and openings of the U-shaped apertures faces the center line of the scale body 10. Alternatively, the openings of the U-shaped apertures can also faces the edge of the body 10 of the gate, and neither the aperture direction of the U-shaped apertures nor the number of rows of the U-shaped apertures constitute a limitation to the embodiment of the present disclosure. Each U-shaped aperture may have different sizes, such as different lengths and widths, and the distance from each U-shaped aperture to the center line of the scale body in the width direction may be different. The magnetic permeability of air in the aperture region is different from the magnetic permeability of ferromagnetic material in the scale body 10. When the magnetizing apparatus is close to the scale body 10, the U-shaped aperture with different sizes and the magnetizing apparatus will form the magnetic field with different structures, and the structure of the magnetic field corresponds to the aperture coding pattern.

FIG. 10 schematically illustrates a fourth coding pattern of the scale body in the magnetic scale device according to an embodiment of the present disclosure. In the fourth coding pattern of FIG. 10, a short-line combined aperture coding pattern is adopted, in which short-line aperture with different lengths are used as basic constituent units of the coding pattern, and the required coding pattern is formed by combining in the length and width directions of the scale body. The magnetic permeability of air in the aperture region is different from the magnetic permeability of ferromagnetic material in the scale body 10. When the magnetizing apparatus is close to the scale body 10, the aperture with short wires of different sizes and the magnetizing apparatus will form the magnetic field with different structures, and the structure of the magnetic field corresponds to the aperture coding pattern.

In the aperture coding patterns shown in any one of FIGS. 7-10, the predetermined coding patterns of the scale body 10 divides the ferromagnetic material into the non-central symmetrical discontinuous shape in the width direction, such as the alternating arrangement of Z-shaped apertures and anti-Z-shaped apertures in FIG. 7, the alternating arrangement of 2 rows of in-line apertures in FIG. 8, the alternating arrangement of 2 rows of u-shaped apertures in FIG. 9, and the alternating arrangement of short lines in the length direction in FIG. 10. Further, the predetermined coding pattern on the scale body 10 makes the ferromagnetic material discontinuous in the length direction. For example, any one of FIGS. 7-10 includes a plurality of discontinuous apertures in the length direction, and adjacent apertures have different arrangements. The balanced structure of the transition magnetic field of the magnetizing apparatus is changed when a portion of the aperture coding pattern of the scale body 10 is close to the magnetizing apparatus, and the position coding for position measurement is formed using the transition magnetic field whose balanced structure has been changed.

The magnetic scale device described in connection with FIGS. 1-10 can be used for position measurement. As described above, the magnetic field detector 30 in the magnetic scale device may detect different magnetic field characteristics corresponding to the coding pattern on the scale body. By calculating the detected magnetic field characteristics, the corresponding position of the scale body can be calculated, and then the position of the magnetic field detector relative to the scale body 10 can be calculated, i.e. the position measurement is performed. In the elevator system, the measured position can be transmitted to the elevator control system to realize the elevator operation and protection control. In the machine tool system, the measured position can be transmitted to the machine tool control system to realize the operation and protection control of the machine tool.

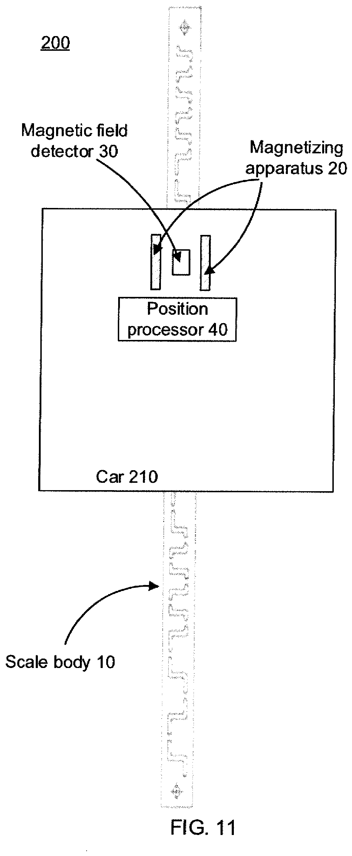

FIG. 11 is a structural diagram illustrating a position measuring device 200 for an elevator according to an embodiment of the present disclosure. As shown in FIG. 11, the position measuring apparatus 200 for the elevator according to an embodiment of the present disclosure includes: a scale body 10 made of a ferromagnetic material, the scale body having a predetermined coding pattern; a magnetizing apparatus 20 including a pair of magnets forming a transition magnetic field having a balanced structure, the scale body capable of changing the transition magnetic field; a magnetic field detector 30 located in the transition magnetic field and used for detecting a magnetic field formed by the magnetizing apparatus under a function of the scale body; and a position processor 40 used for measuring a position of the magnetic field detector relative to the scale body according to the magnetic field detected by the magnetic field detector 30 when the magnetizing apparatus 20 moves relative to the scale body 10.

The specific implementation and operation of the scale body 10, the magnetizing apparatus 20 and the magnetic field detector 30 in the position measuring apparatus 200 of FIG. 11 may refer to the scale body 10, the magnetizing apparatus 20 and the magnetic field detector 30 described above in connection with FIGS. 1-10, respectively. A position processor 40 in the position measuring device 200 is used to measure the position of the magnetic field detector 30 relative to the scale body 10 according to the magnetic field detected by the magnetic field detector 30 when the magnetizing apparatus 20 moves relative to the scale body 10.

The position processor 40 may be connected to the magnetic field detector 30 through wired communication methods to receive magnetic field data from the magnetic field detector 30. Alternatively, the position processor 40 may be connected to the magnetic field detector 30 through wireless communication methods. For example, the wired communication methods include wires, transmission lines of printed circuit boards, and the like. For example, the wireless communication methods include infrared communication, Bluetooth communication, near-field communication, etc. The communication methods between the position processor 40 and the magnetic field detector 30 does not constitute a limitation to the present disclosure.

The position processor 40 may be implemented using various processors, such as general purpose processors, special purpose processors, field programmable logic arrays (FPGAs), microprocessors, and the like. The position processor 40 cooperates with a memory for storing a control program. When the position processor 40 runs the control program in the memory, the generated control instruction causes the position processor 40 to measure the position of the magnetic field detector 30 relative to the scale body 10 according to the magnetic field detected by the magnetic field detector 30.

As described above in connection with FIGS. 3 and 4, when the scale body 10 is located in the region above the transition magnetic field of the magnetizing apparatus 20, the originally symmetrical transition magnetic field will expand or compress due to the scale body 10 of the ferromagnetic material newly added in the magnetic field. The position processor 40 can represent the binary "1" and "0", respectively, using the extended or compressed magnetic field, identify the corresponding coding pattern using the binary number, and calculate the position of the magnetic field detector 30 relative to the scale body 10. For a specific position to be measured, a plurality of magnetic sensing elements can be used to measure a magnetic field, for example, 6 magnetic sensing elements arranged in succession in FIG. 2, which sense magnetic field vector values, including the direction and value of the magnetic field. The position processor 40 can calculate the absolute position of the magnetic field detector 30 according to the magnetic field vector values sensed by the continuous 6-bit magnetic sensing elements.

In FIG. 11, the position measuring device 200 is illustrated as being used for an elevator control system, and is described in the present disclosure taking the position measuring device 200 as an example for an elevator control system. However, the position measuring apparatus 200 may also be used in other systems, such as a machine tool control system.

As shown vertically in FIG. 11, the scale body 10 may be deployed in a hoistway (not shown) in which an elevator runs, for example, vertically fixed to a hoistway wall of the hoistway. Although the scale body 10 in FIG. 11 is vertically full of apertures, one or more sections of the scale body 10 in the vertical direction may have no aperture and, for example, have an aperture coding pattern only near an elevator stop.

In FIG. 11, the magnetizing apparatus 20, the magnetic field detector 30 and the position processor 40 may be located in the car 210 of the elevator. The magnetizing apparatus 20 and the magnetic field detector 30 have smaller sizes, and when placed in a relatively closed space such as a car, the magnetizing apparatus 20 and the magnetic field detector 30 have less influence on external metal materials, so that the reliability of the position measuring device 200 can be improved. Alternatively, the magnetizing apparatus 20 and the magnetic field detector 30 may be located in the car, and the position processor 40 may be located in an elevator control system communicatively connected to the car of the elevator. Alternatively, the magnetizing apparatus 20 and the magnetic field detector 30 may be attached to the outer wall of the car. The specific positions of the magnetizing apparatus 20, the magnetic field detector 30 and the position processor 40 in the elevator system do not constitute limitations to the embodiments of the present disclosure.

The scale body 10 is continuously arranged in a space to be measured, such as a hoistway. The ferromagnetic material of the scale body 10 is a substance that is not magnetic, and will be magnetic, i.e., magnetized, under the function of a magnetic field. Magnetism of the ferromagnetic material disappears when its distance from the magnets exceeds a predetermined distance value. The scale body 10 will not adsorb other metal fragments.

Examples of the ferromagnetic material are ferritic stainless steel or conventional ferromagnetic material subjected to electroplating treatment. The ferritic stainless steel or electroplated conventional ferromagnetic materials do not suffer from general corrosion and rust, can resist conventional mechanical collision and friction, is not easy to be affected by harsh environmental factors such as high temperature, high humidity and the like, and has excellent characteristics in environmental tolerance. In the case where the scale body 10 is made of the ferromagnetic material, even if the scale body is contaminated with water, dust and other materials, the magnetic field will not be affected, and interference factors such as smoke and the like will not be feared, and thus the working performance is more reliable.

The scale body in the position measuring devices 200 has a predetermined coding pattern. The predetermined coding pattern divides the ferromagnetic material into a non-central symmetrical discontinuous shape in the width direction and makes the ferromagnetic material discontinuous in the length direction. As an example, the predetermined coding pattern may be any of the coding patterns in FIGS. 7-10, and specific reference may be made to the above description in conjunction with FIGS. 7-10.

When the car 210 moves in the hoistway, the magnetizing apparatus 20 and the magnetic field detector 30 also move relative to the scale body 10. The magnetizing apparatus 20 forms a transition magnetic field with balanced structure. When the magnetizing apparatus 20 and the magnetic field detector 30 approach the scale body 10, the scale body 10 is magnetized by the pair of magnets in the magnetizing apparatus 20, and the balanced structure of the transition magnetic field formed by the magnets is changed. The magnetic field detector 30 detects the transition magnetic field whose balanced structure has changed, and transmits the detected magnetic field value to the position processor 40. The position processor 40 measures the position of the magnetic field detector 30 relative to the scale body 10 based on the detected magnetic field value.

The pair of magnets includes a first magnet and a second magnet shown by diagonal lines in FIG. 11, and the first polarity direction of the first magnet and the second polarity direction of the second magnet are opposite. The pair of magnets form the transition magnetic field having a balanced structure. When the pair of magnets are far away from the scale body 10, the magnetic field detected by the magnetic field detector 30 located at the center of the transition magnetic field is neutral, that is, there is no obvious north-south pole characteristic. When the pair of magnets are close to the scale body 10, the scale body 10 is magnetized under the function of the first magnet and the second magnet, thereby changing the transition magnetic field so that the structure thereof is no longer balanced, and thus a position coding for position measurement can be formed using a transition magnetic field whose balanced structure has changed.

The center of the transition magnetic field of the pair of magnets shown in FIG. 11 forms a balanced point. The magnetic field detector 30 may be located at the center of the transition magnetic field and detect the magnetic field after the transition magnetic field is changed under the function of the scale body. Further, the center of the scale body 10 in width may be located at the center of the transition magnetic field, and the surface of the scale body 10 is parallel to the detection surface of the magnetic field detector 30.

The magnetic field detector 30 may include a plurality of magnetic sensing elements, such as 6 magnetic sensing elements shown in FIG. 2. The relative position between the magnetizing apparatus 20 and the magnetic field detector 30 can be the embodiment of FIG. 5 and related description. Alternatively, the relative position between the magnetizing apparatus 20 and the magnetic field detector 30 can also be the embodiment of FIG. 6 and the related description. That is, the detection surface of the magnetic field detector 30 faces the scale body 10, and the magnetizing apparatus 20 is located on the back surface of the magnetic field detector opposite to the detection surface and further away from the scale body 10 than the magnetic field detector 30. When the magnetizing apparatus 20 is located on the back surface of the magnetic field detector 30 and further away from the scale body 10, which reduces the influence of the magnetizing apparatus 20 on external metal materials and further improves the reliability of the position measuring device 200. The relative positional relationship between the magnetizing apparatus 20 and the magnetic field detector 30 does not constitute a limitation to the embodiments of the present disclosure.

Therefore, in the position measuring device 200 in the present disclosure, a specific ferromagnetic material is selected for the scale body to properly fit between the scale body and the magnetizing apparatus, and different positions of the scale body are determined by using a predetermined coding patterns of the scale body, so that adverse effects of environmental factors on the magnetic scale device can be avoided, reliable magnetic field data can be provided, and accurate and reliable position measurement can be performed according to the reliable magnetic field value.

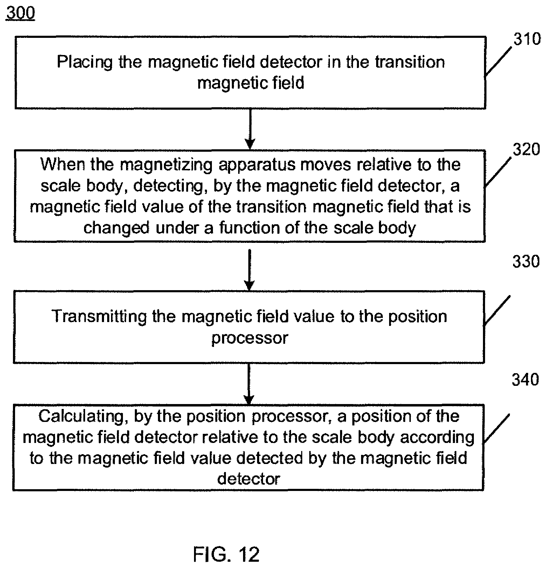

FIG. 12 is a flow chart schematically illustrating a position measuring method 300 according to an embodiment of the present disclosure. The position measuring method 300 can be used for the position measuring device as shown in FIG. 11, and can be described with reference to FIG. 11 and in conjunction with FIG. 11. The position measuring device includes a scale body made of a ferromagnetic material, a magnetizing apparatus including a pair of magnets, a magnetic field detector, and a position processor. The scale body has a predetermined coding pattern, and the pair of magnets form a transition magnetic field having a balanced structure.

The position measuring method 300 includes: placing the magnetic field detector in the transition magnetic field (310); when the magnetizing apparatus moves relative to the scale body, detecting, by the magnetic field detector, a magnetic field value of the transition magnetic field that is changed under a function of the scale body (320); transmitting the magnetic field value to the position processor (330); calculating, by the position processor, a position of the magnetic field detector relative to the scale body according to the magnetic field value detected by the magnetic field detector. (340).

In 310, the magnetic field detector is placed in the transition magnetic field having a balanced structure. The magnetic field detector may be located at the center of the transition magnetic field having the balanced structure or at a position deviating from the center of the transition magnetic field having the balanced structure. The detection surface of the magnetic field detector may face away from the magnetizing apparatus and toward the scale body, as shown in fig. 6. Alternatively, the detection surface of the magnetic field detector may also face both the magnetizing apparatus and the scale body. Alternatively, the magnetic field detector may be on the same line as the magnetizing apparatus. The specific position of the magnetic field detector may vary according to the magnets in the magnetizing apparatus, or may vary according to the specific measurement environment, measurement requirements, etc. The position of the magnetic field detector can be referred to the above related descriptions in conjunction with illustrations of FIGS. 2, 5, 6 and 11.

In 320, when the magnetizing apparatus moves relative to the scale body, the magnetic field detector is used to detect the magnetic field value of the transition magnetic field changed under the function of the scale body. In an example of an elevator system, the magnetic field detector is used to detect the magnetic field value of the transition magnetic field changed under the function of the scale body when the car moves relative to the scale body, for example. The determined magnetic field value can be a binary value, such as a coding pattern on the left or right side of the magnetic field detector to mark "0" or "1", and can also be a magnetic field vector value including the magnitude and direction of the magnetic field. The magnetic field detector can include a plurality of magnetic sensing elements to obtain a plurality of magnetic field data or magnetic field vector values. The form and number of detected magnetic field values for position measurement may vary depending on the precision of the position calculation, the manner in which the position is calculated, and the like.

In 330, the magnetic field value is transmitted to the position processor. The magnetic field detector is an element for converting magnetic field signals into electrical signals. Accordingly, the magnetic field data can be transmitted to the position processor for processing in a wired or wireless method. The transmission method adopted can be set as required.

In 340, the position processor calculates the position of the magnetic field detector relative to the scale body according to the magnetic field value detected by the magnetic field detector. The position processor can represent the binary "1" and "0" by means of the extended or compressed magnetic field respectively, and identify the corresponding coding pattern using the binary number, and calculate the position of the magnetic field detector relative to the scale body. In the case where magnetic field data is measured using a plurality of magnetic sensing elements in 330, if the magnetic sensing elements sense magnetic field vector values, including the direction and value of the magnetic field, the position processor may calculate the position of the magnetic field detector according to a continuous plurality of magnetic field vector values. The code pattern of the scale body is fixed, and the magnetic field data generated by the interaction between the scale body and the magnets is predictable under the condition that the structure of the position measuring device is fixed. This allows the position processor to measure the position according to the generated magnetic field data.

In the position measuring method of the present disclosure, the position corresponding to the predetermined coding pattern is measured by measuring the change of the magnetic field of the magnets under the influence of the predetermined coding pattern of the scale body based on the predetermined coding pattern on the scale body, thereby performing the position measuring.

Those of ordinary skill in the art will appreciate that the elements and algorithm steps of the various examples described in connection with the embodiments disclosed herein can be implemented in electronic hardware or a combination of computer software and electronic hardware. Whether these functions are implemented in hardware or software depends on the specific application and design constraints of the technical scheme. Those skilled in the art can use different methods to implement the described functions for each particular application, but such implementation should not be considered to be beyond the scope of the present disclosure.

Those skilled in the art can clearly understand that for the convenience and brevity of the description, the specific working process of the system, the device and the unit described above can refer to the corresponding processes in the foregoing method embodiments and will not be described here again.

In several embodiments provided in this application, it should be understood that the disclosed systems, devices and methods may be implemented in other ways. For example, the embodiment of the apparatus described above is only schematic. For example, the division of the units is only a logic function division. In actual implementation, there may be another division mode, for example, multiple units or components may be combined or integrated into another system, or some features may be ignored or not performed. On the other hand, the mutual coupling or direct coupling or communication connection shown or discussed may be indirect coupling or communication connection through some interfaces, devices or units, and may be in electrical, mechanical or other forms.

The units described as separate components may or may not be physically separated, and the components displayed as units may or may not be physical units, that is, may be located in one place, or may be distributed to multiple network units. Some or all of the units can be selected according to actual needs to achieve the purpose of this embodiment.

Further, each functional unit in various embodiments of the present disclosure may be integrated into one processing unit, or each unit may exist physically separately, or two or more units may be integrated into one unit.

If the functions are implemented in the form of software functional units and sold or used as independent products, they can be stored in a computer readable storage medium. Based on this understanding, the technical solution of the present disclosure can be embodied in the form of a software product, which is stored in a storage medium and includes a number of instructions to cause a computer device (which can be a personal computer, a server, or a network device, etc.) to perform all or part of the steps of the method described in various embodiments of the present disclosure. The aforementioned storage media include: U disk, removable hard disk, Read-Only Memory (ROM), Random Access Memory (RAM), magnetic disk or optical disk and other media that can store program codes.

The above description is only a specific embodiment of the present disclosure, but the scope of protection of the present disclosure is not limited thereto, and any changes or substitutions that can easily occur to those skilled in the art within the technical scope disclosed in this disclosure should be covered within the scope of protection of this disclosure. Therefore, the scope of protection of the present disclosure should be determined by the scope of the claims.

## Claims

1. A magnetic scale device (100, 200) comprising:
a scale body (10) made of a ferromagnetic material, the scale body having
a predetermined coding pattern;
a magnetizing apparatus (20) including a pair of magnets, the magnets
forming a transition magnetic field having a balanced structure, wherein the magnetic field at the intersection of the magnetic field of a first magnet and the magnetic field of a second magnet is neutral, the scale body being capable of changing the transition magnetic field, when the magnetizing apparatus moves relative to the scale body in a length direction of the scale body; and
a magnetic field detector (30) located in the transition magnetic field and
used for detecting a magnetic field formed by the magnetizing apparatus under a function of the scale body,
wherein the predetermined coding pattern of the scale body comprises a plurality of discontinuous apertures in the length direction and adjacent apertures have different arrangements,
and changes the balanced structure of the transition magnetic field when approaching the magnets, thereby forming a position coding for position measurement by means of the transition magnetic field whose balanced structure has been changed.

2. The magnetic scale device according to claim 1, wherein the scale body is continuously disposed in a space to be measured, and magnetism of the ferromagnetic material disappears when its distance from the magnets exceeds a predetermined distance value.

3. The magnetic scale device according to claim 1, wherein the predetermined coding pattern of the scale body divides the ferromagnetic material into a non-central symmetric discontinuous shape in the width direction.

4. The magnetic scale device according to claim 1, wherein the ferromagnetic material comprises at least one of a ferritic stainless steel and a conventional ferromagnetic material subjected to electroplating treatment.

5. A magnetic scale device according to claim 1, wherein
the first magnet and the second magnet are oppositely disposed, a first polarity direction of the first magnet and a second polarity direction of the second magnet being opposite.

6. A magnetic scale device according to claim 1, wherein
a balanced point is formed at a center of the transition magnetic field of the magnets, and
the magnetic field detector is located at the center of the transition magnetic field and detects a magnetic field after the transition magnetic field is changed under the function of the scale body.

7. A magnetic scale device according to claim 1, wherein
a balanced point is formed at a center of the transition magnetic field of the magnets, and
a center of the scale body in width is located at the center of the transition magnetic field, and a surface of the scale body is parallel to a detection surface of the magnetic field detector.

8. A magnetic scale device according to claim 1, wherein
the detection surface of the magnetic field detector faces the scale body, the magnetizing apparatus is located on a back surface of the magnetic field detector opposite to the detection surface, and is farther away from the scale body than the magnetic field detector.

9. A magnetic scale device according to claim 1, wherein
the predetermined coding pattern on the scale body includes position coding information, and the predetermined coding pattern is capable of changing the transition magnetic field having a balanced structure into a step-wise abrupt magnetic field corresponding to the position coding information; and
the magnetic field detector includes a plurality of magnetic sensing elements, the plurality of magnetic sensing elements being used for detecting magnetic field data of an approximately sine periodic alternating in the step-wise abrupt magnetic field for position measurement.

10. A position measuring device with a scale device according to claim 1 and a position processor used for measuring a position of the magnetic field detector relative to the scale body according to the magnetic field detected by the magnetic field detector when the magnetizing apparatus moves relative to the scale body.

11. The position measuring apparatus according to claim 10, wherein the scale body is continuously disposed in a space to be measured, and magnetism of the ferromagnetic material disappears when its distance from the magnets exceeds a predetermined distance value.

12. The position measuring apparatus according to claim 10, wherein the predetermined coding pattern of the scale body divides the ferromagnetic material into a non-central symmetrical discontinuous shape in the width direction.

13. The position measuring apparatus according to claim 10, wherein the ferromagnetic material comprises at least one of a ferritic stainless steel and a conventional ferromagnetic material subjected to electroplating treatment.

14. The position measuring apparatus according to claim 10, wherein the magnets are a first magnet and a second magnet that are oppositely disposed, a first polarity direction of the first magnet and a second polarity direction of the second magnet being opposite.

15. The position measuring apparatus according to claim 10, wherein
a balanced point is formed at a center of the transition magnetic field of the magnets, and
the magnetic field detector is located at the center of the transition magnetic field and detects a magnetic field after the transition magnetic field is changed under the function of the scale body.

16. The position measuring apparatus according to claim 10, wherein
a balanced point is formed at a center of the transition magnetic field of the magnets, and
a center of the scale body in width is located at the center of the transition magnetic field, and a surface of the scale body is parallel to a detection surface of the magnetic field detector.

17. The position measuring apparatus according to claim 10, wherein the detection surface of the magnetic field detector faces the scale body, the magnetizing apparatus is located on a back surface of the magnetic field detector opposite to the detection surface, and is farther away from the scale body than the magnetic field detector.

18. The position measuring apparatus according to claim 10, wherein
the predetermined coding pattern on the scale body includes position coding information, the predetermined coding pattern is capable of changing the transition magnetic field having a balanced structure into a step-wise abrupt magnetic field corresponding to the position coding information; and
the magnetic field detector includes a plurality of magnetic sensing elements, the plurality of magnetic sensing elements being used for detecting magnetic field data of an approximately sine periodic alternating in the step-wise abrupt magnetic field for position measurement.

19. The position measuring apparatus according to any one of claims 10-18, wherein the position measuring device is used for an elevator control system, the scale body is deployed in a hoistway in which the elevator runs, and the magnetizing apparatus, the magnetic field detector and the position processor are located on a bridge car of the elevator.

20. A position measuring method for a position measuring device, the position measuring device comprising a scale body made of a ferromagnetic material, a magnetizing apparatus including a pair of magnets, a magnetic field detector, and a position processor, the scale body having a predetermined coding pattern, the magnets forming a transition magnetic field having a balanced structure, wherein the magnetic field at the intersection of the magnetic field of a first magnet and the magnetic field of a second magnet is neutral,
wherein the predetermined coding pattern of the scale body comprises a plurality of discontinuous apertures in the length direction and wherein adjacent apertures have different arrangements, and the position measuring method comprises:
placing the magnetic field detector into the transition magnetic field (310);
when the magnetizing apparatus moves relative to the scale body in the length direction of the scale body, detecting, by the magnetic field detector, a magnetic field value of the transition magnetic field that is changed under a function of the scale body (320);
transmitting the magnetic field value to the position processor (330); and
calculating, by the position processor, a position of the magnetic field detector relative to the scale body according to the magnetic field value detected by the magnetic field detector (340).

## Patentansprüche

1. Magnetische Skalenvorrichtung (100, 200), umfassend:
einen Skalenkörper (10) aus einem ferromagnetischen Material,
wobei der Skalenkörper Folgendes aufweist:
ein vorbestimmtes Kodierungsmuster;
eine Magnetisierungseinrichtung (20), welche ein Paar Magnete umfasst, wobei die Magnete ein Übergangsmagnetfeld mit einer ausgeglichenen Struktur bilden, wobei das Magnetfeld am Schnittpunkt des Magnetfelds eines ersten Magneten und des Magnetfelds eines zweiten Magneten neutral ist, wobei es dem Skalenkörper möglich ist, das Übergangsmagnetfeld zu ändern,
wenn sich die Magnetisierungseinrichtung relativ zu dem Skalenkörper in einer Längsrichtung des Skalenkörpers bewegt; und
einen Magnetfelddetektor (30), der sich in dem Übergangsmagnetfeld befindet und zum Detektieren eines durch die Magnetisierungseinrichtung unter einer Wirkung des Skalenkörpers ausgebildeten Magnetfelds verwendet wird,
wobei das vorbestimmte Kodierungsmuster des Skalenkörpers eine Vielzahl von diskontinuierlichen Öffnungen in der Längsrichtung umfasst und wobei benachbarte Öffnungen unterschiedliche Anordnungen aufweisen,
und wobei das vorbestimmte Kodierungsmuster die ausgeglichene Struktur des Übergangsmagnetfelds bei Annäherung an die Magneten ändert, wodurch mittels des Übergangsmagnetfelds,
dessen ausgeglichene Struktur geändert wurde, eine Positionskodierung zur Positionsmessung gebildet ist.

2. Magnetische Skalenvorrichtung nach Anspruch 1, wobei der Skalenkörper kontinuierlich in einem zu messenden Bereich angeordnet ist und der Magnetismus des ferromagnetischen Materials verschwindet, wenn sein Abstand von den Magneten einen vorbestimmten Abstandswert überschreitet.

3. Magnetische Skalenvorrichtung nach Anspruch 1, wobei das vorbestimmte Kodierungsmuster des Skalenkörpers das ferromagnetische Material in der Breitenrichtung in eine nicht zentrale, symmetrische, diskontinuierliche Form unterteilt.

4. Magnetische Skalenvorrichtung nach Anspruch 1, wobei das ferromagnetische Material ferritischen nichtrostenden Stahl und/oder ein herkömmliches ferromagnetisches Material, das einer Elektroplattierbehandlung unterzogen wurde, umfasst.

5. Magnetische Skalenvorrichtung nach Anspruch 1, wobei
der erste Magnet und der zweite Magnet gegenüberliegend angeordnet sind, wobei eine erste Polungsrichtung des ersten Magneten und eine zweite Polungsrichtung des zweiten Magneten entgegengesetzt sind.

6. Magnetische Skalenvorrichtung nach Anspruch 1, wobei
ein ausgeglichener Punkt in einer Mitte des Übergangsmagnetfelds der Magneten ausgebildet ist, und
der Magnetfelddetektor sich in der Mitte des Übergangsmagnetfelds befindet und, nachdem das Übergangsmagnetfeld unter der Wirkung des Skalenkörpers geändert wurde, ein Magnetfeld detektiert.

7. Magnetische Skalenvorrichtung nach Anspruch 1, wobei
ein ausgeglichener Punkt in einer Mitte des Übergangsmagnetfelds der Magneten ausgebildet ist, und
sich eine Mitte des Skalenkörpers in der Breite in der Mitte des Übergangsmagnetfelds befindet und eine Fläche des Skalenkörpers parallel zu einer Detektionsfläche des Magnetfelddetektors ist.

8. Magnetische Skalenvorrichtung nach Anspruch 1, wobei
die Detektionsfläche des Magnetfelddetektors dem Skalenkörper zugewandt ist, die Magnetisierungseinrichtung sich auf einer Rückseite des Magnetfelddetektors gegenüber der Detektionsfläche befindet und weiter von dem Skalenkörper entfernt ist als der Magnetfelddetektor.

9. Magnetische Skalenvorrichtung nach Anspruch 1, wobei
das vorbestimmte Kodierungsmuster auf dem Skalenkörper Positionskodierungsinformationen umfasst und es dem vorbestimmten Kodierungsmuster möglich ist, das Übergangsmagnetfeld mit einer ausgeglichenen Struktur entsprechend den Positionskodierungsinformationen in ein stufenweise sich abrupt änderndes Magnetfeld zu ändern; und
der Magnetfelddetektor eine Vielzahl von magnetischen Messfühlern umfasst, wobei die Vielzahl von magnetischen Messfühlern zum Detektieren von Magnetfelddaten eines annähernd sinusförmigen periodischen Wechsels in dem stufenweise sich abrupt ändernden Magnetfeld zur Positionsmessung verwendet wird.

10. Positionsmessvorrichtung mit einer Skalenvorrichtung nach
Anspruch 1 und einem Positionsprozessor, der dazu verwendet wird, eine Position des Magnetfelddetektors relativ zu dem Skalenkörper entsprechend dem Magnetfeld, das durch den Magnetfelddetektor detektiert wurde, wenn die Magnetisierungseinrichtung sich relativ zu dem Skalenkörper bewegt, zu messen.

11. Positionsmesseinrichtung nach Anspruch 10, wobei der
Skalenkörper kontinuierlich in einem zu messenden Bereich angeordnet ist und der Magnetismus des ferromagnetischen Materials verschwindet, wenn sein Abstand von den Magneten einen vorbestimmten Abstandswert überschreitet.

12. Positionsmesseinrichtung nach Anspruch 10, wobei das vorbestimmte Kodierungsmuster des Skalenkörpers das ferromagnetische Material in der Breitenrichtung in eine nicht zentrale, symmetrische, diskontinuierliche Form unterteilt.

13. Positionsmesseinrichtung nach Anspruch 10, wobei das ferromagnetische Material ferritischen nichtrostenden Stahl und/oder ein herkömmliches ferromagnetisches Material, das einer Elektroplattierbehandlung unterzogen wurde, umfasst.

14. Positionsmesseinrichtung nach Anspruch 10, wobei
die Magneten ein erster Magnet und ein zweiter Magnet sind, die gegenüberliegend angeordnet sind, wobei eine erste Polungsrichtung des ersten Magneten und eine zweite Polungsrichtung des zweiten Magneten entgegengesetzt sind.

15. Positionsmesseinrichtung nach Anspruch 10, wobei
ein ausgeglichener Punkt in einer Mitte des Übergangsmagnetfelds der Magneten ausgebildet ist, und
der Magnetfelddetektor sich in der Mitte des Übergangsmagnetfelds befindet und, nachdem das Übergangsmagnetfeld unter der Wirkung des Skalenkörpers geändert wurde, ein Magnetfeld detektiert.

16. Positionsmesseinrichtung nach Anspruch 10, wobei
ein ausgeglichener Punkt in einer Mitte des Übergangsmagnetfelds der Magneten ausgebildet ist, und
sich eine Mitte des Skalenkörpers in der Breite in der Mitte des Übergangsmagnetfelds befindet und eine Fläche des Skalenkörpers parallel zu einer Detektionsfläche des Magnetfelddetektors ist.

17. Positionsmesseinrichtung nach Anspruch 10, wobei
die Detektionsfläche des Magnetfelddetektors dem Skalenkörper zugewandt ist, die Magnetisierungseinrichtung sich auf einer Rückseite des Magnetfelddetektors gegenüber der Detektionsfläche befindet und weiter von dem Skalenkörper entfernt ist als der Magnetfelddetektor.

18. Positionsmesseinrichtung nach Anspruch 10, wobei
das vorbestimmte Kodierungsmuster auf dem Skalenkörper Positionskodierungsinformationen umfasst, wobei es dem vorbestimmten Kodierungsmuster möglich ist, das Übergangsmagnetfeld mit einer ausgeglichenen Struktur entsprechend den Positionskodierungsinformationen in ein stufenweise sich abrupt änderndes Magnetfeld zu ändern; und
der Magnetfelddetektor eine Vielzahl von magnetischen Messfühlern umfasst, wobei die Vielzahl von magnetischen Messfühlern zum Detektieren von Magnetfelddaten eines annähernd sinusförmigen periodischen Wechsels in dem stufenweise sich abrupt ändernden Magnetfeld zur Positionsmessung verwendet wird.

19. Positionsmesseinrichtung nach einem der Ansprüche 10 bis 18, wobei die Positionsmessvorrichtung für ein Aufzugssteuersystem verwendet wird, der Skalenkörper in einem Aufzugsschacht, in dem der Aufzug fährt, eingesetzt wird und sich die Magnetisierungseinrichtung, der Magnetfelddetektor und der Positionsprozessor auf einem Fahrkorb des Aufzugs befinden.

20. Positionsmessverfahren für eine Positionsmessvorrichtung, wobei
die Positionsmessvorrichtung einen Skalenkörper aus einem ferromagnetischen Material, eine ein Paar Magneten umfassende Magnetisierungseinrichtung, einen Magnetfelddetektor und einen Positionsprozessor umfasst, wobei der Skalenkörper ein vorbestimmtes Kodierungsmuster aufweist, wobei die Magneten ein Übergangsmagnetfeld mit einer ausgeglichenen Struktur bilden, wobei das Magnetfeld am Schnittpunkt des Magnetfelds eines ersten Magneten und des Magnetfelds eines zweiten Magneten neutral ist, wobei das vorbestimmte Kodierungsmuster des Skalenkörpers eine Vielzahl von diskontinuierlichen Öffnungen in der Längsrichtung umfasst und wobei benachbarte Öffnungen unterschiedliche Anordnungen aufweisen, und wobei das Positionsmessverfahren folgende Schritte umfasst:
Setzen des Magnetfelddetektors in das Übergangsmagnetfeld (310);
wenn sich die Magnetisierungseinrichtung relativ zu dem Skalenkörper in der Längsrichtung des Skalenkörpers bewegt, Detektieren eines Magnetfeldwertes des Übergangsmagnetfelds, das unter einer Wirkung des Skalenkörpers geändert wird, durch den Magnetfelddetektor (320);
Senden des Magnetfeldwerts an den Positionsprozessor (330); und
Berechnen einer Position des Magnetfelddetektors relativ zu dem Skalenkörper entsprechend dem Magnetfeldwert, der durch den Magnetfelddetektor detektiert wurde, durch den Positionsprozessor (340).

## Revendications

1. Dispositif d'échelle (100, 200) magnétique comprenant :
un corps d'échelle (10) fait d'un matériau ferromagnétique, le corps d'échelle ayant
un motif de codage prédéterminé ;
un appareil de magnétisation (20) comprenant une paire d'aimants,
les aimants formant un champ magnétique de transition ayant une structure équilibrée, dans lequel le champ magnétique à l'intersection du champ magnétique d'un premier aimant et du champ magnétique d'un deuxième aimant est neutre, le corps d'échelle étant capable de modifier le champ magnétique de transition lorsque l'appareil de magnétisation se meut par rapport au corps d'échelle dans une direction longitudinale du corps d'échelle ; et
un détecteur (30) de champ magnétique situé dans le champ magnétique de transition et utilisé pour détecter un champ magnétique formé par l'appareil de magnétisation sous une fonction du corps d'échelle,
dans lequel le motif de codage prédéterminé du corps d'échelle comprend une pluralité d'ouvertures discontinues dans la direction longitudinale et dans lequel des ouvertures adjacentes ont des dispositions différentes,
et dans lequel ledit motif de codage prédéterminé modifie la structure équilibrée du champ magnétique de transition à l'approche des aimants, moyennant quoi un codage de position pour une mesure de position est formé au moyen du champ magnétique de transition dont la structure équilibrée a été modifiée.

2. Dispositif d'échelle magnétique selon la revendication 1, dans lequel le corps d'échelle est disposé en continu dans un espace à être mesuré et le magnétisme du matériau ferromagnétique disparaît lorsque sa distance des aimants dépasse une valeur de distance prédéterm inée.

3. Dispositif d'échelle magnétique selon la revendication 1, dans lequel le motif de codage prédéterminé du corps d'échelle divise le matériau ferromagnétique en une forme discontinue, symétrique et non centrale dans la direction de la largeur.

4. Dispositif d'échelle magnétique selon la revendication 1, dans lequel le matériau ferromagnétique comprend un acier inoxydable ferritique et/ou un matériau ferromagnétique conventionnel soumis à un traitement d'électrodéposition.

5. Dispositif d'échelle magnétique selon la revendication 1, dans lequel le premier aimant et le deuxième aimant sont disposés de manière opposée, une première direction de polarité du premier aimant et une deuxième direction de polarité du deuxième aimant étant opposées.

6. Dispositif d'échelle magnétique selon la revendication 1, dans lequel un point équilibré est formé dans un centre du champ magnétique de transition des aimants, et
le détecteur de champ magnétique est situé dans le centre du champ magnétique de transition et détecte un champ magnétique après que le champ magnétique de transition a été modifié sous la fonction du corps d'échelle.

7. Dispositif d'échelle magnétique selon la revendication 1, dans lequel un point équilibré est formé dans un centre du champ magnétique de transition des aimants, et
un centre du corps d'échelle en largeur est situé dans le centre du champ magnétique de transition et une surface du corps d'échelle est parallèle à une surface de détection du détecteur de champ magnétique.

8. Dispositif d'échelle magnétique selon la revendication 1, dans lequel la surface de détection du détecteur de champ magnétique est orientée vers le corps d'échelle, l'appareil de magnétisation est situé sur une surface arrière du détecteur de champ magnétique opposée à la surface de détection, et est plus loin du corps d'échelle que le détecteur de champ magnétique.

9. Dispositif d'échelle magnétique selon la revendication 1, dans lequel le motif de codage prédéterminé sur le corps d'échelle comprend des informations de codage de position et le motif de codage prédéterminé est capable de modifier le champ magnétique de transition ayant une structure équilibrée en un champ magnétique qui se modifie brusquement par étapes selon les informations de codage de position ; et
le détecteur de champ magnétique comprend une pluralité d'éléments capteurs magnétiques, la pluralité d'éléments capteurs magnétiques étant utilisée pour détecter des données du champ magnétique d'une alternance approximativement sinusoïdal et périodique dans le champ magnétique qui se modifie brusquement par étapes pour une mesure de position.

10. Dispositif de mesure de position ayant un dispositif d'échelle selon la revendication 1 et un processeur de position utilisé pour mesurer une position du détecteur de champ magnétique par rapport au corps d'échelle selon le champ magnétique détecté par le détecteur de champ magnétique lorsque l'appareil de magnétisation se meut par rapport au corps d'échelle.

11. Appareil de mesure de position selon la revendication 10, dans lequel le corps d'échelle est disposé en continu dans un espace à être mesuré et le magnétisme du matériau ferromagnétique disparaît lorsque sa distance des aimants dépasse une valeur de distance prédéterminée.

12. Appareil de mesure de position selon la revendication 10, dans lequel le motif de codage prédéterminé du corps d'échelle divise le matériau ferromagnétique en une forme discontinue, symétrique et non centrale dans la direction de la largeur.

13. Appareil de mesure de position selon la revendication 10, dans lequel le matériau ferromagnétique comprend un acier inoxydable ferritique et/ou un matériau
ferromagnétique conventionnel soumis à un traitement d'électrodéposition.

14. Appareil de mesure de position selon la revendication 10, dans lequel
les aimants sont un premier aimant et un deuxième aimant qui sont disposés de manière opposée, une première direction de polarité du premier aimant et une deuxième direction de polarité du deuxième aimant étant opposées.

15. Appareil de mesure de position selon la revendication 10, dans lequel
un point équilibré est formé dans un centre du champ magnétique de transition des aimants, et
le détecteur de champ magnétique est situé dans le centre du champ magnétique de transition et détecte un champ magnétique après que le champ magnétique de transition a été modifié sous la fonction du corps d'échelle.

16. Appareil de mesure de position selon la revendication 10, dans lequel
un point équilibré est formé dans un centre du champ magnétique de transition des aimants, et
un centre du corps d'échelle en largeur est situé dans le centre du champ magnétique de transition et une surface du corps d'échelle est parallèle à une surface de détection du détecteur de champ magnétique.

17. Appareil de mesure de position selon la revendication 10, dans lequel
la surface de détection du détecteur de champ magnétique est orientée vers le corps d'échelle, l'appareil de magnétisation est situé sur une surface arrière du détecteur de champ magnétique opposée à la surface de détection et est plus loin du corps d'échelle que le détecteur de champ magnétique.

18. Appareil de mesure de position selon la revendication 10, dans lequel
le motif de codage prédéterminé sur le corps d'échelle comprend des informations de codage de position, le motif de codage prédéterminé est capable de modifier le champ magnétique de transition ayant une structure équilibrée en un champ magnétique qui se modifie brusquement par étapes selon les informations de codage de position ; et
le détecteur de champ magnétique comprend une pluralité d'éléments capteurs magnétiques, la pluralité d'éléments capteurs magnétiques étant utilisée pour détecter des données du champ magnétique d'une alternance approximativement sinusoïdal et périodique dans le champ magnétique qui se modifie brusquement par étapes pour une mesure de position.

19. Appareil de mesure de position selon l'une quelconque des revendications 10 à 18, dans lequel le dispositif de mesure de position est utilisé pour un système de commande d'ascenseur, le corps d'échelle est déployé dans une cage d'ascenseur dans laquelle se déplace l'ascenseur, et l'appareil de magnétisation, le détecteur de champ magnétique et le processeur de position sont situés sur une cabine de l'ascenseur.

20. Procédé de mesure de position pour un dispositif de mesure de position, le dispositif de mesure de position comprenant un corps d'échelle fait d'un matériau ferromagnétique, un appareil de magnétisation comprenant une paire d'aimants, un détecteur de champ magnétique et un processeur de position, le corps d'échelle ayant un motif de codage prédéterminé, les aimants formant un champ magnétique de transition ayant une structure équilibrée, dans lequel le champ magnétique à l'intersection du champ magnétique d'un premier aimant et du champ magnétique d'un deuxième aimant est neutre,
dans lequel le motif de codage prédéterminé du corps d'échelle comprend une pluralité d'ouvertures discontinues dans la direction longitudinale et dans lequel des ouvertures adjacentes ont des dispositions différentes, et dans lequel le procédé de mesure de position comprend les étapes suivantes :
placer le détecteur de champ magnétique dans le champ magnétique de transition (310) ;
lorsque l'appareil de magnétisation se meut par rapport au corps d'échelle dans la direction longitudinale du corps d'échelle, détecter par le détecteur de champ magnétique une valeur de champ magnétique du champ magnétique de transition qui est modifié sous une fonction du corps d'échelle (320) ;
transmettre la valeur de champ magnétique au processeur de position (330) ; et
calculer par le processeur de position une position du détecteur de champ magnétique par rapport au corps d'échelle selon la valeur de champ magnétique détectée par le détecteur de champ magnétique (340).
